# EUROPEAN PATENT APPLICATION

(11) **EP 2 592 503 A1**
(43) Date of publication of application: **15.05.2013**
(21) Application number: 11188535.6
(22) Date of filing: 10.11.2011
(51) Int. Cl.: G05B 17/02, G06F 17/50

(54) **A system for adapting a model of a real world system with respect to changes in the real world system**

(71) Applicant: Siemens Aktiengesellschaft, 80333 München (DE)
(72) Inventor: Nayana, Vishwa, 560079 Bangalore (IN); Tummala, Chaitanya, 560070 Bangalore (IN); Eeratta, Raghavendra, 560091 Bangalore (IN)

(57) **Abstract**

A self-adaptive system (1) for adapting a model (2) of a real world system (3) with respect to changes in the real world system (3), including a code interpreter (4) for receiving a piece of code (5) representative of real control flows (6) between various real components (7) of the real world system (3) and an accessibility information (8) representative of model control flows (9) from a model database (10) of a model editor (11), and for process the piece of code (5) and the accessibility information (8) to produce a processed information (12) related to flows and connections between the real components (7). The model editor (11) adapted to receive the processed information (12) and to generate and/or update the model (2) of the real world system (3) using the model database (10) and the processed information (12).

## Description

The invention relates to a system for adapting a model of a real world system with respect to changes in the real world system. More specifically, the invention relates to a system for adapting a model of a real world system with respect to changes in the real world system, wherein the system is self-adaptive in nature which doesn't require any human interventions or requires insignificant human interventions for adapting the model when a change occurs in the real world system.

In real world systems which are enormously dynamic, deriving logical models for the real world systems is a challenging task, especially the real world systems with domain specific (like energy, industrial automation, etc...) applications. These domain specific real world systems are monitored by the domain experts and controlled through control rooms. The domain experts / maintenance operator inspect the physical location of each of the components present in the system to keep track of the status of entire system.

In case of any component or system failure, the domain expert or maintenance operator has to patrol to the plant yard to find them. This involves lot of time as well as needs more man power to track huge systems spread across a city or a country. It also requires people who keep track of the real world systems, to have in depth knowledge about the real world system they are monitoring.

Deriving logical models to visualize the control flow between components in systems helps to identify and address the problem in the real world system quickly. One such technique is disclosed by US Patent No. 7676294. The patent describes visualization system that generates a visualization of manufacturing operations and corresponding workflow is provided. An interface component receives input concerning displayed objects and information. A context component can detect, infer or determine context information regarding an entity or application. A workflow component binds workflow information to industrial automation manufacturing-related information. A visualization component dynamically generates visualization from a set of display objects to present to a user that is a function of the received context information, workflow information, and industrial automation manufacturing-related information. On further addition of components the system logical model has to be reconstructed or modified by domain experts. This remodeling involves manual intervention requiring huge effort to verify the interdependencies between components in such systems.

An object of the invention of the invention is to provide a self-adaptive system for adapting a model for a real world system with respect to changes occurring in the real world system.

The object of the invention is achieved by the self-adaptive system of claim 1 and the method of claim 10.

According to an embodiment of the self-adaptive system, the self-adaptive system includes a code interpreter for receiving a piece of code representative of real control flows between various real components of the real world system and an accessibility information representative of model control flows from a model database of a model editor. The code interpreter processes the piece of code and the accessibility information to produce a processed information related to flows and connections between the real components. The self-adaptive system also includes the model editor for receiving the processed information and to generate and/or update the model of the real world system using the model database and the processed information. This provides a self-adaptive system which updates the model of the real world system without any human interventions.

In an alternate embodiment, the system further includes a code generator which receives interpreted control flow information for real control flows between real components to generate the piece of code. Including the code generator into self-adaptive system makes the self-adaptive system independent from external sources to receive the piece of code.

In yet alternate embodiment, the system further includes a interpreter unit which receives a physical control flow information from the real components of the real world system. The interpreter unit includes a domain specific knowledge database which stores domain specific rules related to behavior of various real components. The interpreter unit further processes the physical control flow information using the domain specific rules to generate the interpreted control flow information and to provide the interpreted control flow information to the code generator. Such interpreter unit helps to convert the physical control flow into interpreted control flow which is more machine understandable and helps the self-adaptive system to receive the changes in the real world system directly.

In one embodiment, the interpreter unit further includes a component preference database which stores preference information related to a preference of the components to be shown in the model. The interpreter unit processes the physical control information using the preference information along with the domain specific rules to generate the interpreted control flow information. The preference information helps to populate only those real components which are being preferred by a user onto the model which makes the model uncongested.

According to an exemplary embodiment, the accessibility information includes a mapping of the piece of code to the real components. The accessibility information processor is coupled to the code generator to receive the piece of code and map the piece of code onto the real components to update the accessibility information with the mapping of the piece of code to the real components. Such mapping on the real components with respect to the piece of code helps to provide more processed input to the code interpreter for faster generation of the model.

In another embodiment, the accessibility information includes a mapping of the piece of code, the real components and a unique accessibility identifier for each model component corresponding to the real component. The accessibility information processor is coupled to the model editor to receive the unique accessibility identifier and to update the accessibility information with the mapping of the piece of code, the real components and the unique accessibility identifier. The unique accessibility identifier is representative of the model components on the model. This helps to provide even more processed accessibility information for even faster generation of the model.

According another embodiment, the code interpreter receives updated model information related to the generation and/or updating of the model. The code interpreter processes the piece of code and the accessibility information along with the updated model information to generate the processed information. This provides the code interpreter with graphical structure of the model which helps to generate/update the model with better structure.

According to yet another embodiment, the system further includes a command queue adapted to be coupled to the code generator and the code interpreter to receive the piece of code and to transfer the piece of code to the code interpreter in various intervals. This helps to comprehend various part of the piece of code to process the piece of code in a better fashion for generating the model. The above-mentioned and other features of the invention will now be addressed with reference to the drawings of a preferred embodiment of the self-adaptive system. The illustrated embodiments of the self-adaptive system are intended to illustrate, but not limit the invention. The drawings contain the following figures, in which like numbers refers to like parts, throughout the description and drawings.

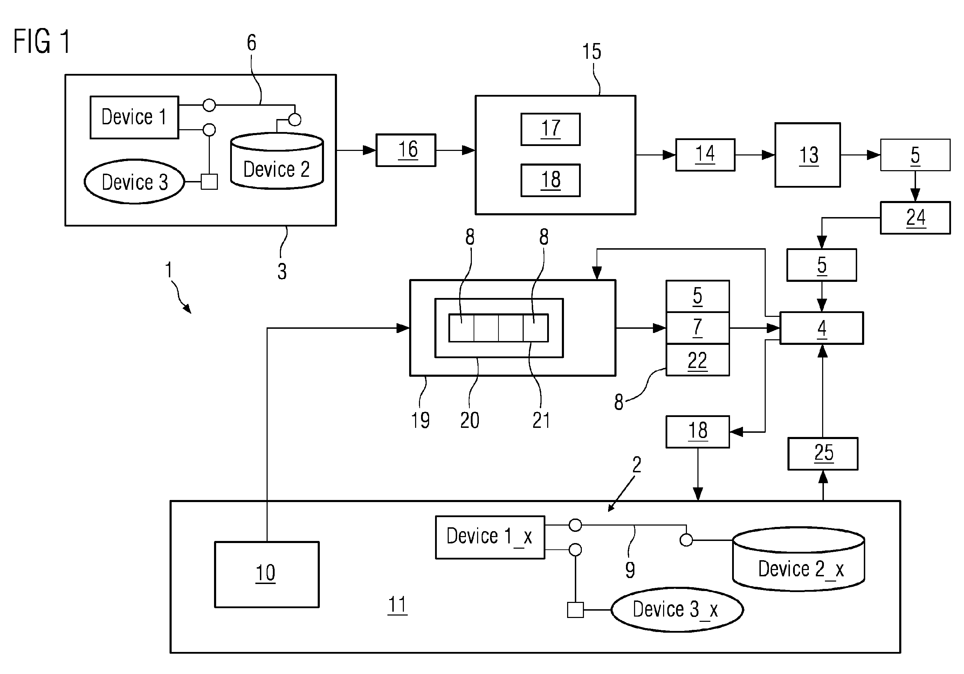

FIG 1 is a schematic diagram of a self-adaptive system.

FIG 1 illustrates a self-adaptive system including a model editor 11, a code interpreter 4, a accessibility information provider 19, a code generator 13, a interpreter unit 15 and a real world system 3 coupled together to generate a model 2 for the real world system 3.

The real world system 3 represents various systems like open car parking systems, traffic management systems, street lighting systems, industrial automation systems, etc. The FIG 1 shows the real world system having real components 7 as Device 1, Device 2 and Device 3, wherein the Device 1 is connected to Device 2 and Device 3 through control flows 6. The physical control flow information 16 about the real components 7 and control flows 6 between them is further sent by the real components 7 to the interpreter unit 15 with the help of sensors placed with each of the real components 7.

The interpreter unit 15 is a computing processor which receives all information of the changes occurring in the real world system as the physical control flow information 16 and further interpret the physical control flow information 16 in a machine understandable format, so that in spite of human intervention, the system 1 self-adaptively change the model 2 of the real world system 3. The interpreter unit 15 includes a domain specific knowledge database 17 which stores domain specific rules related to behavior of various real components 7 and a component preference database 18 which stores a preference information related to a preference of the components to be shown in the model 2. The interpreter unit 15 receives the physical control flow information 16 from the real components 7 of the real world system 3 and processes the physical control information 16 using the domain specific rules from the domain specific knowledge database 17 and the preference information from the component preference database 18 to provide an interpreted control flow information 14. The interpreted control flow information 14 is machine understandable information about the physical control flows 6 which is provided as input to the code generator 13 by the interpreter unit 15.

The code generator 13 is a computing processor which receives the interpreted control flow information 14 for real control flows 6 between real components 7 and generates the piece of code 5. The code generator can also be a central processing unit of a personal computer which can be adapted to take the interpreted control flow information 14 as input and can further process the interpreted control flow information 14 to generate the piece of code 5. With respect to the real world system 3, one representation of the piece of code 5 can be:
Device1 AtLocation X
Device2 AtLocation y
Device3 Atlocation Z
Device1_Port1 ConnectTo Device2_port1
Device1_Port2 ConnectTo Device3_port1
Device2_Port2 ConnectTo Devide3_port2

As per the semantics for each line of the piece of code 5, Device1_Port1 ConnectTo Device2_Port1 indicates that the Device1 is connected to Device2 at Port1.

The self-adaptive system further includes a command queue 24, a buffer memory, which is coupled to the code generator 13 and the code interpreter 4 to receive the piece of code 5 and to transfer the piece of code 5 to the code interpreter 4 in various intervals. The command queue 24 behaves as a collecting repository of the piece of code 5 which keeps on getting populated as the code generator 13 generates the piece of code 5. Further, the command queue 24 releases the piece of code 5 on various intervals. The intervals can be defines as time based or quantification of the piece of code 5 based (like kilo lines of piece of code) or logical division based, wherein the piece of code 5 is divided into various logical segments or combination thereof.

The code interpreter 4 is a computing processor which receives as input a piece of code 5 representative of real control flows 6 between various real components 7 of the real world system 3 from the code generator 13, an accessibility information 8 from an accessibility information processor 19, wherein the accessibility information is representative of model control flows 9 from a model database 10 of a model editor 11, and an updated model information 25 related to the generation and/or updating of the model 2 from the model editor 11. The code interpreter processes the piece of code 5, the accessibility information 8 and the updated model information 25 to produce a processed information 12 related to flows and connections between the real components 7. In an alternate embodiment, the code interpreter 4 need not receive the updated model information 25 and generates model using the accessibility information 8 and the piece of code 5.

The accessibility information processor 19 is a computing processor which provides the accessibility information 8 to the code interpreter 4 and coupled to the code generator 13 to receive the piece of code 5, the model editor 11 to receive the information of all possible control flows between the model components 23 and the code interpreter 4 to provide the accessibility information 8. The accessibility information processor 19 can also be a central processing unit of a general purpose computer adapted to be coupled to the code interpreter 4 and the code generator 13. The accessibility processor 19 includes an accessibility dictionary 20 stored in internal memory of the accessibility information processor 19, wherein the accessibility dictionary 21 stores a set 21 of the accessibility information 8 representative of all possible control flows in the model database 10 and to be coupled to the model database 10 to update the accessibility information 8. The accessibility information processor 19 uses the accessibility dictionary 20 to provide the accessibility information 8 from the set 21 to the code interpreter 4. The accessibility information processor 19 uses the accessibility dictionary 20 to provide the accessibility information 8 from the set 21 to the code interpreter 4.

The accessibility information 8 includes a mapping of the piece of code 5, the real components 7 and a unique accessibility identifier 22 for each model component 23 corresponding to the real component 7. The accessibility identifier 22 is an index for each of the model components 23 to refer to the model components 23 during any further processing of the models 2. The accessibility information processor 19 is coupled to the model editor 11 to receive the unique accessibility identifier 22 and to the code generator 4 to receive the piece of code 5 for updating the accessibility information 8 with the mapping of the piece of code 5, the real components 7 and the unique accessibility identifier 22. In an alternate embodiment, the accessibility information processor 19 is coupled to only the code generator 13 to receive the piece of code 5, so that the accessibility information processor 19 updates the accessibility information 8 to only include mapping of the piece of code 5 onto the real components 7.

The model editor 11 receives the processed information 12 from the code interpreter 4 and generates and/or updates the model 2 of the real world system 3 using the model database 10 and the processed information 12. The model editor 11 is also coupled to the code interpreter 4 to provide the updated model information 25 related to the generation and/or updating of the model 2, so that the code interpreter 4 is adapted to process the piece of code 5 and the accessibility information 8 along with the updated model information 25 to generate the processed information 12. The model editor 11 is also coupled to the accessibility information processor 19 to receive the unique accessibility identifier 22, so that the accessibility information processor 19 update the accessibility information 8 with the mapping of the piece of code 5, the real components 7 and the unique accessibility identifier 22. The model editor 11 is a graphical interface which can receive textual and/or graphical inputs from the code interpreter 4 to generate a graphical structure of the model 4.

The model database 10 is a toolbox for the model editor 11 stored in an internal memory of the model editor 11, which provides model components 23 to the model editor 11 and model control flows 9 between the various model components 23, so that the editor 11 generates the model 2 using the model components 23 and the model control flows 9 on a basis of the processed information 12. The model database 10 is also coupled to the accessibility dictionary 20 of the accessibility information processor 19 to provide information regarding all control flows possible between various model components 23.

The model 2 as shown in the FIG 1 has model components 23 as Device 1_x, Device 2_y and Device 3_x, wherein the model control flows 9 are between Device 1_x and Device 2_y, and Device 1_x and Device 3_x. The model 2 is representative of real world system 3, where Device 1 is represented by Device 1_x, Device 2 is represented by Device 2_y and Device 3 is represented by Device 3_x. The information regarding model components 23 as Device 1_x, Device 2_y and Device 3_x is fed into the accessibility information processor 19 as unique accessibility identifier 22.

## Claims

1. A self-adaptive system (1) for adapting a model (2) of a real world system (3) with respect to changes in the real world system (3), the self-adaptive system (1) comprising:
- a code interpreter (4) adapted to receive a piece of code (5) representative of real control flows (6) between various real components (7) of the real world system (3) and an accessibility information (8) representative of model control flows (9) from a model database (10) of a model editor (11), and adapted to process the piece of code (5) and the accessibility information (8) to produce a processed information (12) related to flows and connections between the real components (7),
- the model editor (11) adapted to receive the processed information (12) and to generate and/or update the model (2) of the real world system (3) using the model database (10) and the processed information (12).

2. The system (1) according to the claim 1, comprising:
- a code generator (13) adapted to receive an interpreted control flow information (14) for real control flows (6) between real components (7) and adapted to generate the piece of code (5).

3. The system (1) according to the claim 2, comprising:
- a interpreter unit (15) adapted to receive a physical control flow information (16) from the real components (7) of the real world system (3), wherein the interpreter unit (15) comprising:
- a domain specific knowledge database (17) adapted to store domain specific rules related to behavior of various real components (7),
wherein the interpreter unit (15) is further adapted to process the physical control flow information (16) using the domain specific rules to generate the interpreted control flow information (14) and to provide the interpreted control flow information (14) to the code generator (13).

4. The system (1) according to the claim 3, wherein the interpreter unit (15) further comprising:
- a component preference database (18) adapted to store a preference information related to a preference of the components to be shown in the model (2),
wherein the interpreter unit (15) is adapted to process the physical control information (16) using the preference information to generate the interpreted control flow information (14).

5. The system (1) according to any of the claims 1 to 4, comprising:
- an accessibility information processor (19) adapted to provide the accessibility information (8) to the code interpreter (4), wherein the accessibility information processor (19) comprising:
- an accessibility dictionary (20) adapted to store a set (21) of the accessibility information (8) representative of all control flows in the model database (10) and to be coupled to the model database (10) to update the accessibility information (8),
wherein the accessibility information processor (19) uses the accessibility dictionary (20) to provide the accessibility information (8) from the set (21) to the code interpreter (4).

6. The system (1) according to the claim 5, wherein the accessibility information processor (19) is adapted to be coupled to the code generator (4) to receive the piece of code (5) and map the piece of code (5) onto the real components (7) to update the accessibility information (8) with a mapping of the piece of code (5) onto the real components (7).

7. The system (1) according to claim 6, wherein the accessibility information (8) comprises a mapping of the piece of code (5), the real components (7) and a unique accessibility identifier (22) for each model component (23) corresponding the real component (7), wherein the accessibility information processor (19) is coupled to the model editor (11) to receive the unique accessibility identifier (22) and to update the accessibility information (8) with the mapping of the piece of code (5), the real components (7) and the unique accessibility identifier (22), wherein the unique accessibility identifier (22) is an index for each model components (23).

8. The system (1) according to any of the claim 1 to 7, wherein the code interpreter (4) is adapted to receive an updated model information (25) related to the generation and/or updating of the model (2), wherein the code interpreter (4) is adapted to process the piece of code (5) and the accessibility information (8) along with the updated model information (25) to generate the processed information (12).

9. The system (1) according to any of the claims 1 to 8, comprising:
- a command queue (24) adapted to be coupled to the code generator (13) and the code interpreter (4) to receive the piece of code (5) and to transfer the piece of code (5) to the code interpreter (4) in various intervals.

10. A method for adapting a model (2) of a real world system (3) with respect to changes in the real world system (3) comprising:
- transferring a piece of code (5) representative of real control flows (6) between various real components (7) of the real world system (3) from a code generator (13) and an accessibility information (8) representative of model control flows (9) from a model database (10) of a model editor (11) to a code interpreter (4),
- processing the piece of code (5) and the accessibility information (8) by the code interpreter (4) to produce a processed information (12) related to flows and connections between the real components (7),
- transferring the processed information (12) from the code interpreter (4) to the model editor (11) and generating and/or updating the model (2) of the real world system (3) using the model database (10) and the processed information (12).

11. The method according to claim 10 comprising:
- transferring an interpreted control flow information (14) for real control flows (6) between real components (7) from a interpreter unit (15) to the code generator (13),
- generating the piece of code (5) by the code generator (13) by using the interpreted control flow information (14).

12. The method according to claim 11 comprising:
- transferring a physical control flow information (16) from the real components (7) of the real world system (3) to the interpreter unit (15),
- processing the physical control flow information (16) using domain specific rules and generating the interpreted control flow information (14) by the interpreter unit (15),
wherein the domain specific rules are adapted to be stored in a domain specific knowledge database (17) of the interpreter unit (15) and the domain specific rules are related to behavior of various real components (7).

13. The method according to claim 12, wherein processing the physical control information (16) by the interpreter unit (15) using the preference information to generate the interpreted control flow information (14), wherein the preference information is adapted to be stored in a components preference database (18) of the interpreter unit (15).

14. The method according to any of the claims 10 to 13 comprising:
- providing the accessibility information (8) to the code interpreter (4) by an accessibility information processor (19) using an accessibility dictionary (20),
wherein the accessibility dictionary (20) is adapted to store a set (21) of the accessibility information (8) representative of all control flows in the model database (10) and to be coupled to the model database (10) to update the accessibility information (8).

15. The method according to claim 14 comprising:
- coupling the code generator (13) to the accessibility information processor (19) to transfer the piece of code (5),
- mapping the piece of code (5) onto the real components (7) by the accessibility information processor (19) to update the accessibility information (8) with a mapping of the piece of code (5) onto the real components (7).

16. The method according to the claim 15, comprising:
- coupling the accessibility information processor (19) to the model editor (11) for transferring an unique accessibility identifier (22) for each model components (23) from the model editor (11) to the accessibility information processor (19),
- mapping the unique accessibility identifier (22) onto the real components (7) and the piece of code (5) by the accessibility information processor (19) to update the accessibility information (8) with a mapping of the piece of code (5), the real components (7) and the unique accessibility identifier (22),
wherein the unique accessibility identifier (22) is an index for each model components (23).
